# EUROPÄISCHE PATENTSCHRIFT

(11) **EP 3 892 904 B1**
(45) Veröffentlichungstag und Bekanntmachung des Hinweises auf die Patenterteilung: **04.10.2023**
(21) Anmeldenummer: 20168353.9
(22) Anmeldetag: 07.04.2020
(51) Int. Cl.: F16L 21/03, F16L 47/08

(54) **ROHRVERBINDUNG**
PIPE CONNECTOR
RACCORD TUBULAIRE

(43) Veröffentlichungstag der Anmeldung: 13.10.2021
(73) Patentinhaber: Gebr. Ostendorf Kunststoffe GmbH, 49377 Vechta (DE)
(72) Erfinder: Lamping, Alwin, 49377 Vechta (DE)
(74) Vertreter: Siekmann, Gunnar

(56) Entgegenhaltungen:
- DE-A1- 2 614 575
- DE-C2- 4 327 163
- US-A- 2 245 154

## Beschreibung

Die Erfindung betrifft eine Rohrverbindung mit den Merkmalen des Oberbegriffs des Patentanspruchs 1.

Eine Rohrverbindung oder eine Ringdichtung der eingangs genannten Art ist aus der DE 26 14 575 A1 bekannt. Insbesondere wird dort eine Rohrverbindungsdichtung für Rohr-Steck-Verbindung mit konzentrisch übereinander greifenden Rohrelementen beschrieben, die durch einen gummielastischen Dichtungsring gegeneinander abgedichtet sind. Der Dichtungsring weist im axialschnitt V-förmige Ringlippen auf.

Aus der US 2 245 154 A auch in dieser Druckschrift ist eine Rohrverbindung beschreiben, wobei das eine Rohrende zunächst keilförmig zulaufend ausgebildet ist und bei einschieben des zweite Rohres sich ausweitet und die einliegende Ringdichtung dadurch in den Ringspalt zwischen dem ersten Rohr und dem zweiten Rohr verpresst wird.

Eine weitere Rohrverbindung oder eine Ringdichtung ist aus der DE 43 27 163 C2 bekannt. Mit dieser Dichtung wird eine Rohrverbindung mit einer in einer rechteckförmigen Ringsicke einsetzbaren Ringdichtung geschaffen, die flexibel über große Toleranzbereiche der zu verbindenden Rohr einsetzbar ist.

Es wird gelegentlich an Rohrverbindungen die Anforderung gestellt, dass diese mit einer Auszugssicherung versehen werden sollen. Insbesondere bei Rohren, in denen Kabel verlegt werden, soll ein versehentliches Auseinandernehmen der Rohre später nicht mehr möglich sein, da dadurch die darin laufenden Kabel beschädigt werden. Insbesondere im Zuge der Glasfaserkabel ist dies eine häufige Forderung. Dazu werden oftmals bei der Verlegung außen auf die Rohre Klemmsysteme aufgesetzt. Dies ist typischerweise langwierig, zeitraubend und kompliziert.

Der Erfindung liegt die Aufgabe zugrunde, eine Rohrverbindung der eingangs genannten Art zu schaffen, mit der ein Auszug verhindert werden kann.

Die Lösung dieser Aufgabe erfolgt mit einer Rohrverbindung mit den Merkmalen des Patentanspruchs 1. Bevorzugte Ausgestaltungen der Erfindung sind in den Unteransprüchen angegeben.

Bei einer Rohrverbindung, bei der das Spitzende eines ersten Rohres in das mit einer Ringsicke versehene Muffenende eines zweites Rohres einsteckbar ist und eine mit einer Dichtlippe versehene Ringdichtung in die Ringsicke einsetzbar ist, wobei die Ringsicke eine dem Muffenende zugewandte Vorderseite und eine dem Muffenende abgewandte Rückseite aufweist und die Ringdichtung und die Dichtlippe bei einem Einschieben des ersten Rohres in Richtung der Rückseite der Ringsicke verformt wird und die Ringdichtung eine keilförmige Spitze aufweist, die am vorderseitigen Ende der Ringsicke positioniert ist, ist erfindungswesentlich vorgesehen, dass die Ringdichtung nach Einschub des ersten Rohres mit ihrem rückwärtigen Ende am rückseitigen Ende der Ringsicke anliegt und gleichzeitig beabstandet zum vorderseitigen Ende der Ringsicke ist und dass die Ringdichtung im Verhältnis zur Ringsicke derart dimensioniert ist, dass die Ringdichtung beim Herausziehen des ersten Rohres an der Vorderseite der Ringsicke anliegt und mit ihrem rückwärtigen Ende beabstandet zum rückseitigen Ende der Ringsicke ist und mit der vorderen keilförmigen Spitze in dem Spalt zwischen dem ersten Rohr und dem zweiten Rohr verklemmt ist. Dadurch wird eine Auszugssicherung geschaffen. Eine Demontage ist dann nur mit einer im Vergleich zum Einstecken mehrfach höheren Kraft möglich. Auf diese Weise wird mit einfachen Mitteln eine Möglichkeit geschaffen, Rohre zu montieren, wobei diese nicht wieder auseinandergezogen werden können und darin verlegte Kabel, insbesondere Glasfaserkabel, geschützt sind.

In einer bevorzugten Ausführungsform liegt die keilförmige Spitze der Ringdichtung nach Einschub des ersten Rohres am ersten Rohr an. Dies wird durch die Form der Dichtung und insbesondere die Größenverhältnisse von Ringdichtung und Ringsicke erreicht. Die keilförmige Spitze weist im vorderen Bereich bevorzugt einen Keil mit einem Winkel von weniger als 30° auf. Bevorzugt hat der Keil einen Winkel von weniger als 25°. Typischerweise hat der Keil einen Winkel zwischen 30° und 15°, bevorzugt zwischen 20° und 25°. Mit einem solchen vorderen Keil ist es besonders gut möglich, dass dieser in den Spalt zwischen dem ersten Rohr und dem zweiten Rohr eindringen kann und dort dann auch eine Verklemmung bewirkt.

Im unbeaufschlagten Zustand weist die Ringdichtung im Bereich der keilförmigen Spitze an der der Ringsicke zugewandten Unterseite einen parallel zur Rohrerstreckung verlaufenden unteren Abschnitt auf. Auch durch diese geometrische Ausbildung wird ein Eindringen der Keilspitze in den Spalt zwischen erstem Rohr und zweitem Rohr beim Versuch des Herausziehens erleichtert.

In einer anderen Weiterbildung der Erfindung weist die Ringdichtung im unbeaufschlagten Zustand auf ihrer unteren, der Ringsicke zugewandten Seite, einen linearen Abschnitt auf, der sich über mehr als 40 % der Gesamtlänge der unbeaufschlagten Ringdichtung erstreckt. Bevorzugt erstreckt sich dieser Abschnitt über mehr als 50 % der Gesamtlänge der unbeaufschlagten Ringdichtung. In der Regel wird eine Erstreckung von 70 % dieses linearen Abschnitts nicht überschritten. Durch diese Ausbildung entwickelt sich nach dem Einschieben des ersten Rohres ein von der keilförmigen Spitze bis zum Boden der Ringsicke durchgehender Abschnitt, durch den ein Einschieben und Verklemmen der keilförmigen Spitze wiederum unterstützt wird.

In einer anderen Weiterbildung der Erfindung weist die Ringsicke an ihrem vorderseitigen Ende bodenseitig einen nahezu vertikal zur Rohrachse ausgebildeten Abschnitt auf, dann einen mit einem Winkel zwischen 30° und 60° zur Rohrachse ausgerichteten Abschnitt und daran anschließend einen Übergangsabschnitt zur Angleichung an die Rohrinnenseite des zweiten Rohres. Mit einer Ringsicke, die also von der sonst üblichen, im Querschnitt eher rechteckförmigen Form abweicht, kann noch einmal eine Verbesserung der Auszugssicherung erreicht werden. Bei einer derart ausgestalteten Ringsicke ist die Ringdichtung nach Einschub des ersten Rohres im Bereich des unter einem Winkel zwischen 30° und 60° ausgerichteten Abschnitts der Ringsicke etwa parallel und beabstandet zu dieser ausgebildet. Dadurch wird eine besonders gute Führung der Ringdichtung und damit auch eine Führung der keilförmigen Spitze in den Klemmbereich zwischen erstem Rohr und zweitem Rohr erreicht.

In einer anderen Ausgestaltung der Erfindung ist die Ringdichtung nach Einlegen in die Ringsicke vor Einschieben des ersten Rohres mit ihrem rückseitigen Ende am rückseitigen Ende der Ringsicke anliegend. Weiterhin liegt die Ringdichtung mit der keilförmigen Spitze im oberen Endbereich des vorderseitigen Endes der Ringsicke an. Dadurch ist eine definierte Montage und Einbau der Ringdichtung in die Ringsicke gewährleistet.

Nachfolgend wird die Erfindung anhand eines in der Zeichnung dargestellten Ausführungsbeispiels weiter erläutert. Im Einzelnen zeigen die schematischen Darstellungen in:
- Figur 1:: ein Querschnitt durch ein erstes Rohr mit einer Ringsicke und einer darin eingelegten Ringdichtung;
- Figur 2:: ein Querschnitt durch die Rohrverbindung mit der Ringsicke und der darin eingelegten Ringdichtung nach dem Einschieben des zweiten Rohres in das erste Rohr; und
- Figur 3:: ein Querschnitt vergleichbar zu Figur 2, jedoch beim Versuch des Herausziehens des ersten Rohres aus dem zweiten Rohr.

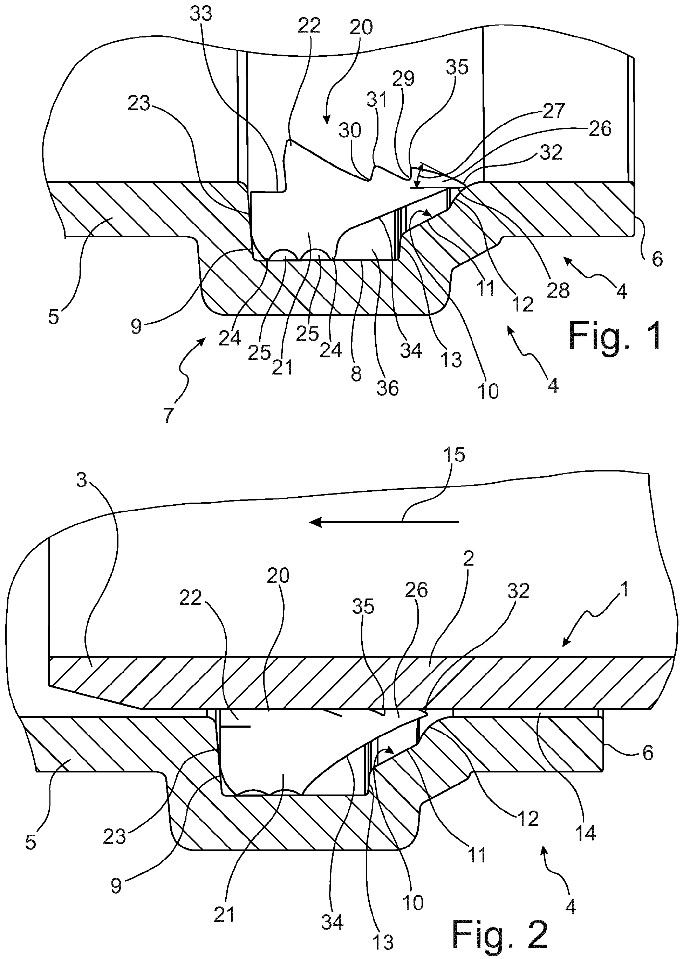

Figur 1 zeigt ein zweites Rohr 4, das das Außenrohr der erfindungsgemäßen Rohrverbindung darstellt. Dieses zweite Rohr 4 hat eine Wand 5 und ein Muffenende 6. Dieses zweite Rohr 4 kann beispielsweise ein Kunststoffrohr, ein Abwasserrohr oder insbesondere auch ein Rohr sein, das zur Verlegung von Kabeln, insbesondere Lichtleiterkabeln verwendet wird. In der Nähe des Muffenendes 6 des zweiten Rohres 4 ist eine umlaufende Ringsicke 7 vorgesehen. Die umlaufende Ringsicke 7 kann in vielen Fällen im Querschnitt etwa rechteckig sein. Im dargestellten Ausführungsbeispiel weicht die Ringsicke 7 an ihrer Vorderseite, die dem Muffenende 6 zugewandt ist, von der Rechteckform ab. Die Ringsicke 7 weist einen Boden 8 und eine Rückseite 9 auf. Die Rückseite 9 ist die Seite der Ringsicke 7, die vom Muffenende 6 abgewandt ist. Die Rückseite 9 ist in Bezug auf die Rohrachse im Wesentlichen vertikal ausgebildet. Die Vorderseite 10 der Ringsicke 7 ist hier dreigeteilt, nämlich weist einen bodenseitigen Übergangsbereich 13 auf, der etwa vertikal zur Rohrachse ausgerichtet ist. Daran schließt sich eine Muffenschräge 11 an, die in einem Winkel zwischen 30° und 60° zur Rohrachse ausgerichtet ist und die Vorderseite 10 der Ringsicke 7 wesentlich prägt. Oberhalb dieser Muffenschräge 11, die im Querschnitt linear ist, ist ein abgerundeter Übergangsbereich 12 vorgesehen, der den Übergang von der Muffenschräge 11 zur Wand 5 des zweiten Rohres 4 darstellt, und in gewölbter Form den Übergang von der Muffenschräge 11 zu der Wand ausbildet, wobei die Wand 5 selbstverständlich parallel zur Längsachse des Rohres 4 ist. In die Ringsicke 7 ist die Ringdichtung 20 eingebaut. In der Figur ist diese im Querschnitt zu sehen. Die Ringdichtung 20 weist einen Basiskörper 21 mit einer Dichtlippe 22 auf. Der Basiskörper 21 hat einen rückseitigen Bereich 23, der im Wesentlichen vertikal ausgebildet ist und an der Rückseite 9 der Ringsicke 7 anliegt. Der rückseitige Bereich 23 und die Dichtlippe 22 sind durch einen Einschnitt 33 voneinander getrennt, der im Wesentlichen einen rechten Winkel ausbildet. Im unteren Bereich weist der Basiskörper 21 drei Füße 24 auf, zwischen denen Freiräume 25 bleiben. Dadurch erfolgt eine definierte Einlage der Ringdichtung 20 in die Ringsicke 7. Bezogen auf den oberen freien Bereich der Ringsicke 7 nimmt der Bereich des Basiskörpers 21 mit den Füßen 24 deutlich weniger als 50 %, insbesondere weniger als 40 %, der Länge der Ringsicke 7 ein. Bezogen auf den Boden 8 der Ringsicke 7 nimmt der Bereich des Basiskörpers 21 der Ringdichtung 20 mit den Füßen 24 etwa 60 %, jedenfalls weniger als 70 % der Länge des Bodens 8 der Ringsicke 7 ein. Die Ringsicke 7 ist an ihrer Rohrinnenseite etwa um den Faktor 1,5 größer als am Boden 8.

Die Ringdichtung 20 weist auf der dem Muffenende 6 zugewandten Seite eine keilförmige Spitze 26 auf, die an ihrer Spitze eine Spannlippe 32 aufweist, die an der Vorderseite 10 der Ringsicke 7, insbesondere im Bereich des Übergangsbereichs 12 der Ringsicke 7 anliegt und insofern für eine definierte Einlage in die Ringsicke 7 sorgt. Die keilförmige Spitze 26 weist einen Winkel 27 auf. Dieser ist bevorzugt kleiner als 30° und insbesondere zwischen 20° und 25° groß. Die keilförmige Spitze 26 hat an ihrer Unterseite einen unteren Abschnitt 28, der im Wesentlichen vertikal ist bzw. parallel zur Längsachse des Rohres 4 ausgerichtet ist oder parallel zur Wand 5 des Rohres 4 ausgerichtet ist. Daran schließt sich in Richtung der Füße 24 ein linearer Abschnitt 34 an. Dieser lineare Abschnitt 34 erstreckt sich über etwa 50 % der Länge der Ringdichtung 20, insbesondere über einen Bereich von 40 % bis 60 % der Länge der Ringdichtung 20. Zwischen diesem linearen Abschnitt 34 und dem Boden der Ringsicke 7 verbleibt ein großer Freiraum 36. Der lineare Abschnitt 34 ist beabstandet aber etwa parallel zu der Muffenschräge 11 ausgebildet. Auf der Seite der Ringsicke 7, die dem Rohrinneren zugewandt ist, endet die keilförmige Spitze 26 gegenüberliegend zur vorderen Spannlippe 32 mit einer Haltelippe 35, die die Ringdichtung 20 hält und eine rollende Dichtung der Ringdichtung 20 in der Ringsicke 7 verhindert. Die Haltelippe 35 wird von einem Einschnitt 29 begrenzt und daran schließt sich mit einer ansteigenden Flanke eine Abstreiflippe 31 an, die einerseits auch zum Halten der Ringdichtung 20 dient und andererseits zum Fernhalten von Verschmutzungen der eigentlichen sich daran anschließenden Dichtlippe 22 dient. Zum Stecken der Rohre ist nämlich Gleitmittel notwendig, das, sofern dies übermäßig vorhanden ist, von der Abstreiflippe 31 abgestriffen werden kann. Dadurch wird eine bessere Abdichtung der Dichtlippe 22 gewährleistet, die von der Abstreiflippe 31 durch eine Einschnürung 30 getrennt ist. Die Dichtlippe 22 ist auch deutlich größer und höher ausgebildet als die Abstreiflippe 31 und die Haltelippe 35.

In Figur 2 wird das erste Rohr 1 in der Figur von rechts nach links entsprechend dem Pfeil 15 als Innenrohr in das zweite Rohr 4 als Außenrohr eingeschoben. Das erste Rohr 1 hat eine Wand 2 und ein Spitzende 3, das das Einschieben erleichtert. Die Ringdichtung 20 liegt mit ihrem Basiskörper 21 und insbesondere dem rückseitigen Bereich 23 am rückseitigen Ende 9 der Ringsicke 7 an. Die Dichtlippe 22 wird in Einschubrichtung in den Einschnitt 33 gedrückt und verpresst sich gegen die Wand 2 des ersten Rohres 1 und dichtet dieses dadurch ab. Die Freiräume 25 zwischen den Füßen 24 werden dadurch auch kleiner, da die Ringdichtung 20 insgesamt etwas nach unten gedrückt wird. Durch die Füße 24 und die Freiräume 25 ist eine zusätzliche Vorspannung in der Ringdichtung 20 gegeben. Durch die Form der keilförmigen Spitze 26 und deren Oberseite mit der Haltelippe 35 liegt diese ebenfalls an der Wand 2 des ersten Rohres 1 an und wird von dem Rohr 1 mit nach hinten geschoben und ist dadurch beabstandet von der Vorderseite 10 der Ringsicke 7. Auch die Abstreiflippe 31 liegt an der Wand 2 des Rohres 1 an. Auch die Spannlippe 32 ist jetzt beabstandet von der Vorderseite 10. Von der Spannlippe 32 bis zu dem vordersten der Füße 24 ergibt sich jetzt ein durchgehender Abschnitt 34', der vor allem den vorhergehenden linearen Abschnitt 34 aber auch den unteren Abschnitt 28 der keilförmigen Spitze 26 und den Übergangsbereich zum vorderen Fuß 24 umfasst und einen insofern noch vergrößerten Abschnitt bildet, der nahezu linear mit einer leichten Wölbung ist. Dieser Abschnitt 34' macht mehr als 50 % der Länge der Ringdichtung 20 in diesem beaufschlagten Zustand aus.

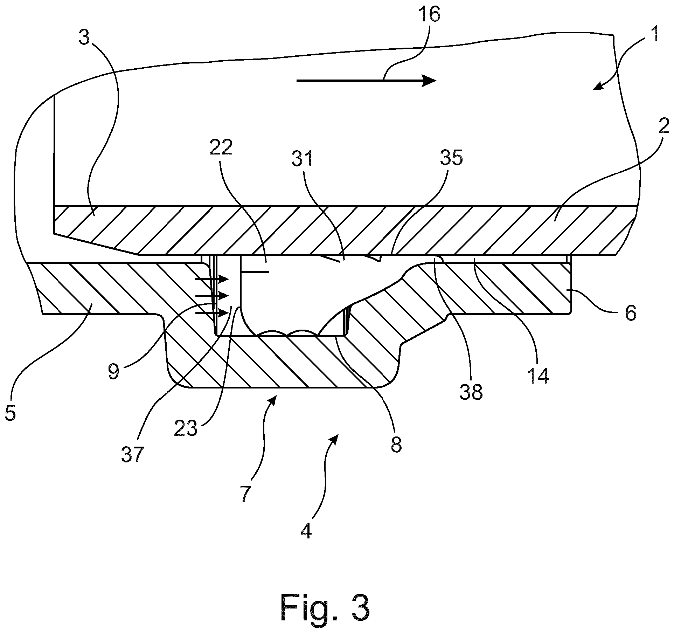

In Figur 3 ist die Situation dargestellt, wenn versucht wird, das erste Rohr 1, also das Innenrohr, in Richtung des Pfeils 16 aus dem zweiten Rohr 4 herauszuziehen. Die Ringdichtung 20 und insbesondere die Dichtlippe 22, die Abstreiflippe 31 und die Haltelippe 35 liegen an der Wand 2 des ersten Rohres 1 an und die Ringdichtung 20 wird insgesamt in Richtung der Vorderseite 10 der Ringsicke 7 gezogen, so dass der rückseitige Bereich 23 der Ringdichtung 20 dann von der Rückseite 9 der Ringsicke 7 beabstandet ist. Es ergibt sich dort ein Freiraum 37 zwischen der Rückseite 9 der Ringsicke 7 und dem rückseitigen Bereich 23 der Ringdichtung 20, der bezogen auf den Boden 8 der Ringsicke 7 mehr als 10 % und insbesondere mehr als 15 %, jedoch nicht mehr als 25 % ausmacht. Auf der dem Muffenende 6 zugewandten Seite wird die Ringdichtung 20 durch den Abschnitt 34', der im Wesentlichen parallel zu der Muffenschräge 11 ausgebildet ist, auf die Vorderseite 10 der Ringsicke 7 und insbesondere die Muffenschräge 11 gepresst und dort nach oben geführt, wobei durch die gesamte Geometrie der Ringdichtung 20 insbesondere durch den linearen Abschnitt 34 bzw. den sich daraus ergebenen Abschnitt 34' und den unteren Abschnitt 28 und die Ausbildung der keilförmigen Spitze 26 die keilförmige Spitze 26 in einen Spalt 14 zwischen dem ersten Rohr 1 und dem zweiten Rohr 4 geführt wird und dort verkeilt und verquetscht und einen weiteren Rückzug des Rohres 1 verhindert. Die Demontage ist dann nur mit einer fünf- bis achtfach höheren Kraft gegenüber der Einsteckkraft möglich und verhindert so effektiv das Auseinanderziehen der Rohrverbindung. Die verquetschte keilförmige Spitze 26 ist hier noch einmal mit 38 bezeichnet.

## Patentansprüche

1. Rohrverbindung, die ein erstes Rohr (1).
ein zweites Rohr (4) und eine mit einer Dichtlippe (22) versehene Ringdichtung (20) aufweist, wobei das erste Rohr (1) ein Spitzende (3) aufweist und das zweite Rohr (4) ein Muffenende (6) aufweist, welches mit einer Ringsicke (7) versehen ist, wobei das Spitzende (3) des ersten Rohres (1) in das Muffenende (6) des zweiten Rohres (4) einsteckbar ist und die Ringdichtung (20) in die Ringsicke (7) einsetzbar ist, wobei die Ringsicke (7) eine dem Muffenende (6) zugewandte Vorderseite (10) und eine dem Muffenende (6) abgewandte Rückseite (9) aufweist, wobei die Ringdichtung (20) und die Dichtlippe (22) beim Einschieben des ersten Rohres (1) in Richtung der Rückseite (9) der Ringsicke (7) verformt werden und die Ringdichtung (20) eine keilförmige Spitze (26) aufweist, die am vorderseitigen Ende der Ringsicke (7) positionierbar ist, wobei die Ringdichtung (20) nach Einschub des ersten Rohres (1) mit ihrem rückwärtigen Ende am rückseitigen Ende der Ringsicke (7) anliegt und gleichzeitig beabstandet zum vorderseitigen Ende der Ringsicke (7) ist,
**dadurch gekennzeichnet, dass**
die Ringdichtung (20) im Verhältnis zur Ringsicke (7) und zum ersten Rohr (1) derart dimensioniert ist, dass die Ringdichtung (20) beim Herausziehen des ersten Rohres (1) an der Vorderseite (10) der Ringsicke (7) anliegt, mit ihrem rückwärtigen Ende beabstandet zum rückseitigen Ende der Ringsicke (7) ist, und mit der vorderen keilförmigen Spitze (26) in dem Spalt (14) zwischen dem ersten Rohr (1) und dem zweiten Rohr (4) verklemmt ist.

2. Rohrverbindung nach Anspruch 1, **dadurch gekennzeichnet, dass** die keilförmige Spitze (26) der Ringdichtung (20) nach Einschub des ersten Rohres (1) am ersten Rohr (1) anliegt.

3. Rohrverbindung nach einem der Ansprüche 1 oder 2, **dadurch gekennzeichnet, dass** die keilförmige Spitze (26) im vorderen Bereich einen Keil mit einem Winkel (27) kleiner als 30° aufweist.

4. Rohrverbindung nach einem der vorhergehenden Ansprüche, **dadurch gekennzeichnet, dass** die Ringdichtung (20) im unbeaufschlagten Zustand im Bereich der keilförmigen Spitze (26) an der der Ringsicke (7) zugewandten Unterseite einen parallel zur Rohrerstreckung verlaufenden unteren Abschnitt aufweist.

5. Rohrverbindung nach einem der vorhergehenden Ansprüche, **dadurch gekennzeichnet, dass** die Ringdichtung (20) im unbeaufschlagten Zustand auf ihrer unteren, dem der Ringsicke (7) zugewandten Seite einen linearen Abschnitt (34) aufweist, der sich über mehr als 40 % der Gesamtlänge der unbeaufschlagten Ringdichtung (20) ausgebildet ist.

6. Rohrverbindung nach einem der vorhergehenden Ansprüche, **dadurch gekennzeichnet, dass** die Ringsicke (7) an ihrem vorderseitigen Ende bodenseitig einen nahezu vertikal zur Rohrachse ausgebildeten Abschnitt aufweist, dann einen mit einem Winkel zwischen 30° und 60° zur Rohrachse ausgerichteten Abschnitt aufweist und daran anschließend ein Übergangsabschnitt zur Angleichung an die Rohrinnenseite des zweiten Rohres (4).

7. Rohrverbindung nach Anspruch 6, **dadurch gekennzeichnet, dass** die Ringdichtung (20) nach Einschub des ersten Rohres (1) im Bereich des unter einem Winkel zwischen 30° und 60° ausgerichteten Abschnitts der Ringsicke (7) etwa parallel und beabstandet zu dieser ausgebildet ist.

8. Rohrverbindung nach einem der vorhergehenden Ansprüche, **dadurch gekennzeichnet, dass** die Ringdichtung (20) nach Einlegen in die Ringsicke (7) vor Einschieben des ersten Rohres (1) mit ihrem rückseitigen Ende am rückseitigen Ende der Ringsicke (7) anliegt und mit der keilförmigen Spitze (26) im oberen Endbereich des vorderseitigen Endes der Ringsicke (7) anliegt.

## Claims

1. A pipe connection comprising a first pipe (1), a second pipe (4) and a ring seal (20) that is provided with a sealing lip (22), wherein the first pipe (1) has a spigot end (3) and the second pipe (4) has a socket end (6) that is provided with an annular bead (7), wherein the spigot end (3) of the first pipe (1) can be inserted into the socket end (6) of the second pipe (4) and the ring seal (20) can be introduced into the annular bead (7), wherein the annular bead (7) has a front side (10) that faces the socket end (6) and a rear side (9) that faces away from the socket end (6), wherein the ring seal (20) and the sealing lip (22) are deformed in the direction of the rear side (9) of the annular bead (7) during the insertion of the first pipe (1) and the ring seal (20) has a wedge-shaped point (26) that can be positioned on the front end of the annular bead (7), and wherein the ring seal (20) abuts on the rear end of the annular bead (7) with its rear end after the insertion of the first pipe (1) and is at the same time spaced apart from the front end of the annular bead (7),
**characterized in that**
the ring seal (20) is dimensioned in relation to the annular bead (7) and the first pipe (1) in such a way that the ring seal (20) abuts on the front side (10) of the annular bead (7) when the first pipe (1) is pulled out, wherein the ring seal is spaced apart from the rear end of the annular bead (7) with its rear end and clamped in the gap (14) between the first pipe (1) and the second pipe (4) with the frontal wedge-shaped point (26).

2. The pipe connection according to claim 1, **characterized in that** the wedge-shaped point (26) of the ring seal (20) abuts on the first pipe (1) after the insertion of the first pipe (1).

3. The pipe connection according to one of claims 1 or 2, **characterized in that** the wedge-shaped point (26) has a wedge with an angle (27) of less than 30° in the front region.

4. The pipe connection according to one of the preceding claims, **characterized in that** the ring seal (20) has in the unstressed state a lower section, which extends parallel to the extent of the pipe, on the underside facing the annular bead (7) in the region of the wedge-shaped point (26).

5. The pipe connection according to one of the preceding claims, **characterized in that** the ring seal (20) has in the unstressed state a linear section (34), which is formed over more than 40 % of the overall length of the unstressed ring seal (20), on its lower side facing the annular bead (7).

6. The pipe connection according to one of the preceding claims, **characterized in that** the annular bead (7) has, on its front end on the bottom side, a section that is formed nearly vertical to the pipe axis, then a section that is aligned at an angle between 30° and 60° to the pipe axis and an adjacent transition section for assimilation to the inner side of the second pipe (4).

7. The pipe connection according to claim 6, **characterized in that** the ring seal (20) is, after the insertion of the first pipe (1), formed approximately parallel to and spaced apart from the annular bead in the region of the section of the annular bead (7), which is aligned at an angle between 30° and 60°.

8. The pipe connection according to one of the preceding claims, **characterized in that** the ring seal (20) abuts on the rear end of the annular bead (7) with its rear end and in the upper end region of the front end of the annular bead (7) with the wedge-shaped point (26) after its introduction into the annular bead (7) and prior to the insertion of the first pipe (1).

## Revendications

1. Raccord tubulaire, qui comporte un premier tube (1), un deuxième tube (4) et un joint d'étanchéité annulaire (20) doté d'une lèvre d'étanchéité (22), sachant que le premier tube (1) comporte une extrémité pointue (3) et le deuxième tube (4) comporte une extrémité de manchon (6), laquelle est dotée d'une moulure annulaire (7), sachant que l'extrémité pointue (3) du premier tube (1) peut être emboîtée dans l'extrémité de manchon (6) du deuxième tube (4) et le joint d'étanchéité annulaire (20) peut être inséré dans la moulure annulaire (7), sachant que la moulure annulaire (7) comporte une face avant (10) tournée vers l'extrémité de manchon (6) et une face arrière (9) éloignée de l'extrémité de manchon (6), sachant que le joint d'étanchéité annulaire (20) et la lèvre d'étanchéité (22) sont déformés lors de l'introduction du premier tube (1) en direction de la face arrière (9) de la moulure annulaire (7) et le joint d'étanchéité annulaire (20) comporte une pointe en forme de coin (26), qui peut être positionnée sur l'extrémité avant de la moulure annulaire (7), sachant que le joint d'étanchéité annulaire (20) vient s'appliquer après introduction du premier tube (1) avec son extrémité arrière à l'extrémité arrière de la moulure annulaire (7) et est en même temps à distance de l'extrémité avant de la moulure annulaire (7),
**caractérisé en ce que**
le joint d'étanchéité annulaire (20) est dimensionné par rapport à la moulure annulaire (7) et par rapport au premier tube (1) de telle manière que le joint d'étanchéité annulaire (20) vient s'appliquer à la face avant (10) de la moulure annulaire (7) lors de l'extraction du premier tube (1), est à distance de l'extrémité arrière de la moulure annulaire (7) avec son extrémité arrière et est bloqué avec la pointe cunéiforme avant (26) dans l'espace (14) situé entre le premier tube (1) et le deuxième tube (4).

2. Raccord tubulaire selon la revendication 1, **caractérisé en ce** la pointe cunéiforme (26) du joint d'étanchéité annulaire (20) vient s'appliquer au premier tube (1) après introduction du premier tube (1) •

3. Raccord tubulaire selon l'une quelconque des revendications 1 ou 2, **caractérisé en ce que** la pointe cunéiforme (26) comporte dans la zone avant un coin avec un angle (27) inférieur à 30°.

4. Raccord tubulaire selon l'une quelconque des revendications précédentes, **caractérisé en ce que** le joint d'étanchéité annulaire (20) comporte à l'état non sollicité dans la zone de la pointe cunéiforme (26) sur la face inférieure tournée vers la moulure annulaire (7) une section inférieure passant parallèlement à l'extension tubulaire.

5. Raccord tubulaire selon l'une quelconque des revendications précédentes, **caractérisé en ce que** le joint d'étanchéité annulaire (20) comporte à l'état non sollicité sur sa face inférieure tournée vers la moulure annulaire (7) une section linéaire (34) qui s'est constituée sur plus de 40 % de la longueur totale du joint d'étanchéité annulaire (20) non sollicité.

6. Raccord tubulaire selon l'une quelconque des revendications précédentes, **caractérisé en ce que** la moulure annulaire (7) comporte à son extrémité avant côté fond une section constituée à peu près verticalement à l'axe tubulaire, comporte ensuite une section orientée avec un angle variant entre 30° et 60° par rapport à l'axe tubulaire et faisant suite à cela une section de transfert pour harmonisation avec la face intérieure tubulaire du deuxième tube (4).

7. Raccord tubulaire selon la revendication 6, **caractérisé en ce que** le joint d'étanchéité annulaire (20) est constitué après introduction du premier tube (1) dans la zone de la section orientée dans un angle variant entre 30° et 60° de la moulure annulaire (7) de façon à peu près parallèle et à distance de celle-ci.

8. Raccord tubulaire selon l'une quelconque des revendications précédentes, **caractérisé en ce que** le joint d'étanchéité annulaire (20) vient s'appliquer avec son extrémité arrière à l'extrémité arrière de la moulure annulaire (7) après insertion dans la moulure annulaire (7) avant introduction du premier tube (1) et vient s'appliquer avec la pointe cunéiforme (26) dans la zone d'extrémité supérieure de l'extrémité avant de la moulure annulaire (7).
